# EUROPÄISCHE PATENTANMELDUNG

(11) **EP 4 726 847 A1**
(43) Veröffentlichungstag der Anmeldung: **15.04.2026**
(21) Anmeldenummer: 24210540.1
(22) Anmeldetag: 04.11.2024
(51) Int. Cl.: H01M 10/42, H01M 10/48, H01M 50/20, H01M 50/24

(54) **BATTERIEWANNE UND VERFAHREN ZUM HERSTELLEN EINER BATTERIEWANNE**

(30) Priorität: 11.10.2024 DE 102024129515
(71) Anmelder: voestalpine Stahl GmbH, 4020 Linz (AT); voestalpine Metal Forming GmbH, 3500 Krems an der Donau (AT)
(72) Erfinder: Radlmayr, Karl, 4020 Linz (AT); Geirhofer, Richard, 4073 Wilhering (AT); Sell, Johannes, 4030 Linz (AT)
(74) Vertreter: Bratovic, Nino Maria

(57) **Zusammenfassung**

Die Erfindung schafft eine Batteriewanne zum Aufnehmen einer Batterie, insbesondere einer Fahrzeugbatterie, sowie Verfahren zum Herstellen einer Batteriewanne. Die Batteriewanne (100; 200) umfasst zumindest:
ein Wannengehäuse (190; 290);
wobei eine Schicht elektrischer Leiterbahnen (130) an oder über einer durchgehenden ersten Schicht (110; 205) des Wannengehäuses (190; 290) aus einem Verbundwerkstoff an dessen konkaver Seite angeordnet ist, und
wobei in der Schicht elektrischer Leiterbahnen (130) zumindest an einem ebenen Abschnitt des Wannengehäuses (190; 290) eine Vielzahl von elektrisch auslesbaren Deformations-Messstrukturen (140) ausgebildet ist.

## Beschreibung

### Technisches Gebiet

Die vorliegende Erfindung betrifft eine Batteriewanne sowie ein Verfahren zum Herstellen einer Batteriewanne, insbesondere eine Batteriewanne zum Aufnehmen einer Fahrzeugbatterie in einem Fahrzeug.

### Technischer Hintergrund

Wiederaufladbare Batterien wie etwa Fahrzeugbatterien für batterieelektrische oder Hybridfahrzeuge, werden häufig in Batteriewannen aufgenommen, in welchen sie transportierbar und vor äußeren Einflüssen geschützt sind.

Insbesondere Fahrzeugbatterien werden typischerweise möglichst weit unten im Fahrzeug angeordnet, um den Schwerpunkt möglichst tief zu halten und die Straßenlage des Fahrzeugs so zu verbessern. Die jeweilige Batteriewanne, in der die Fahrzeugbatterie angeordnet ist, ist für gewöhnlich aus einem robusten Material gefertigt und trägt zum Beispiel dazu bei, Stöße von außen, welche die Fahrzeugbatterie sonst beschädigen oder gar zerstören könnten, abzumildern oder vollständig abzuwehren.

Da Beschädigungen der Fahrzeugbatterie negative Einflüsse auf andere Bestandteile oder auf die Fahreigenschaften des Fahrzeugs haben können, ist es vorteilhaft, zu erkennen, ob und in welchem Ausmaß eine Beschädigung der Batteriewanne erfolgt ist.

Aus der DE 10 2020 119 287 A1 ist beispielsweise eine Schutzplatte mit integrierter Leiterbahn als Deformationssensor bekannt, welche an der konvexen Außenseite einer Batteriewanne angeordnet wird. Somit kann die Schutzplatte verschiedene externe Einflüsse bis zu einem gewissen Grad von der Batteriewanne fernhalten. Erfüllt die Schutzplatte diese Funktion, wird es daher häufig dazu kommen, dass der integrierte Deformationssensor einen Schaden vermeldet, weil die Schutzplatte beschädigt wurde, wobei dann unklar bleibt, ob die zu schützende Batteriewanne (oder sogar die Fahrzeugbatterie an sich) tatsächlich Schaden genommen hat.

### Zusammenfassung der Erfindung

Es ist daher eine Aufgabe der vorliegenden Erfindung, eine verbesserte Batteriewanne und ein Verfahren zum Herstellen einer verbesserten Batteriewanne bereitzustellen, welche insbesondere eine verbesserte Detektion von etwaigen Schäden ermöglichen.

Diese Aufgaben werden durch die Gegenstände der unabhängigen Patentansprüche sowie die beschriebenen Aspekte der vorliegenden Erfindung gelöst.

Dementsprechend wird, gemäß einem ersten Aspekt, eine Batteriewanne zum Aufnehmen einer Batterie (insbesondere einer Fahrzeugbatterie) bereitgestellt, umfassend:
ein Wannengehäuse;
wobei eine Schicht elektrischer Leiterbahnen an (d.h. unmittelbar auf) oder über (d.h. beispielsweise auch mittelbar auf) einer durchgehenden ersten Schicht des Wannengehäuses aus einem Verbundwerkstoff an dessen konkaver Seite angeordnet ist, und
wobei in der Schicht elektrischer Leiterbahnen zumindest an einem ebenen Abschnitt des Wannengehäuses eine Vielzahl von elektrisch auslesbaren Deformations-Messstrukturen ausgebildet ist.

Es ist somit eine grundlegende Idee der vorliegenden Erfindung, dass Deformations-Messtrukturen an der Innenseite eines Wannengehäuses einer Batteriewanne, also an der konkaven Seite, angeordnet sind. Auf diese Weise besteht eine erhöhte Wahrscheinlichkeit, dass von diesen Deformations-Messstrukturen festgestellte Deformationen nicht nur eine vorgelagerte Schutzplatte oder das Wannengehäuse an sich betreffen, sondern tatsächlich die innenliegende Batterie beschädigt haben. Im zusammengebauten Zustand liegt somit die Schicht elektrischer Leiterbahnen mit den Deformations-Messstrukturen insbesondere zwischen der Batterie (z.B. einer Fahrzeugbatterie) und dem Wannengehäuse.

Die Schicht elektrischer Leiterbahnen kann entweder direkt auf der durchgehenden ersten Schicht angeordnet sein, oder über dieser, d.h., es können dazwischen weitere Schichten vorliegen, beispielsweise mindestens eine elektrisch isolierende Schicht und/oder eine Lackschicht oder dergleichen.

Gemäß einigen bevorzugten Ausführungsformen, Varianten oder Verfeinerungen von Ausführungsformen ist die Schicht elektrischer Leiterbahnen in eine (insbesondere ansonsten durchgehende) zweite Schicht des Wannengehäuses eingebettet, beispielsweise seitlich oder an allen Seiten, also insbesondere auch von oben, d.h. an einer von der durchgehenden ersten Schicht abgewandten Seite der Schicht elektrischer Leiterbahnen. Die durchgehende zweite Schicht kann dabei eine isolierende Schicht und/oder eine Schutzschicht sein.

Gemäß einigen bevorzugten Ausführungsformen, Varianten oder Verfeinerungen von Ausführungsformen ist die zweite Schicht eine Lackbeschichtung, die insbesondere über die Schicht elektrischer Leiterbahnen und Zwischenräume in dieser Schicht aufgetragen werden kann. Diese Lackbeschichtung als zweite Schicht kann direkt auf der Schicht elektrischer Leiterbahnen, wo diese vorhanden ist, und ansonsten direkt auf derjenigen Schicht, an welcher die Schicht elektrischer Leiterbahnen angebracht ist, aufgetragen sein.

Gemäß einigen bevorzugten Ausführungsformen, Varianten oder Verfeinerungen von Ausführungsformen ist das Wannengehäuse aus einem in einer entsprechenden Form ausgehärteten Faserverbundwerkstoff, insbesondere umfassend Glasfaser- und/oder Kohlefasereinlagen, ausgebildet. Das Wannengehäuse kann somit beispielsweise aus carbonfaserverstärktem Kunststoff, CFK, ausgebildet sein. Solche Wannengehäuse bieten eine besonders gute Balance zwischen geringem Gewicht und Robustheit.

Gemäß einigen bevorzugten Ausführungsformen, Varianten oder Verfeinerungen von Ausführungsformen umfasst das Wannengehäuse einen in Wannenform ausgebildeten ersten Bestandteil aus einem Verbundwerkstoff sowie einen flachen (d.h. plan ausgeführten) metallischen zweiten Bestandteil, beispielsweise eine metallische Platte. Der metallische zweite Bestandteil kann insbesondere direkt an einem Wannenboden der Wannenform des ersten Bestandteils an dessen konkaver Seite angebracht sein. Die durchgehende erste Schicht des Wannengehäuses kann von dem ersten Bestandteil gebildet sein.

Auf diese Weise können die Vorteile von metallischen Werkstoffen und Verbundwerkstoffen kombiniert werden: der Verbundwerkstoff ist robust und leicht, kann aber unter Umständen elastisch agieren, sodass eine erfolgte Beschädigung an dem Verbundwerkstoff mitunter nicht sichtbar ist. Insbesondere könnte in ungünstigen Fällen eine Verformung des Verbundwerkstoffs sowie eine darauffolgende elastische Zurückverformung des Verbundwerkstoffs zwischen zwei Messungen des Verformungszustands erfolgen, insbesondere wenn vorgesehen ist, dass Messungen des Verformungszustands regelmäßig erfolgen. Die erfolgte Verformung, welche unter Umstände eine Beschädigung der innenliegenden Batterie zur Folge gehabt haben könnte, wäre somit für die Messungen potenziell unsichtbar.

Der metallische Werkstoff hingegen behält seine Form nach einer Beschädigung in der Regel bei, sodass eine Beschädigung physisch sichtbar bleibt, und, was noch wichtiger ist, durch nachfolgende Messungen somit auch noch erfasst werden kann. Darüber hinaus sind ist die Schicht elektrischer Leiterbahnen leicht an dem metallischen zweiten Bestandteil anbringbar, und dieser wiederum leicht an dem Verbundwerkstoff anbringbar.

Der zweite Bestandteil ist vorteilhaft als eine metallische Platte mit einer Dicke von 1 Millimeter oder weniger, insbesondere von 0,5 Millimeter oder weniger, ausgebildet. Auf diese Weise erhöht sich das Gesamtgewicht des Wannengehäuses nur in geringem Maße.

Der zweite Bestandteil kann beispielsweise als so genannter "tailormade functional steel", TFS, ausgebildet sein, und somit in entsprechenden fortgeschrittenen Herstellungsverfahren erzeugt werden.

Der erste Bestandteil kann durch einen in einer entsprechenden Form ausgehärteten Faserverbundwerkstoff, insbesondere umfassend Glasfaser- und/oder Kohlefasereinlagen, ausgebildet sein. Das Wannengehäuse kann somit beispielsweise aus carbonfaserverstärktem Kunststoff, CFK, ausgebildet sein.

Ein weiterer Vorteil bei der Variante mit den beiden unterschiedlichen Bestandteilen ist, dass die Batteriewanne leicht an Kundenbedürfnisse angepasst werden kann. Beispielsweise kann der erste Bestandteil, also die Wannenform aus dem Verbundwerkstoff, für eine Vielzahl von Produkten mit derselben Form hergestellt werden, wodurch sich auch Vorteile bei der Lagerung und Lagerlogistik ergeben. Unterschiedliche Verschaltungen oder Leitungsanordnungen der Batteriewanne können dann in einfacher Weise durch die Auswahl und Anbringung eines jeweils unterschiedlichen zweiten, metallischen Bestandteils bereitgestellt werden.

Beispielsweise können so auch in derselben geometrischen Wannenform, je nach darin angeordneter metallischer Platte, unterschiedliche Funktionen bereitgestellt werden, etwa für unterschiedliche Batterietypen, Fahrzeugtypen, oder für Basis- und Premiumfunktionen. Die geometrische Form der Batteriewanne kann somit optimal an einen bestimmten Fahrzeugtyp, eine Karosserie, eine Fahrzeugplattform etc. angepasst sein, während sich die elektrischen Funktionen, aber auch z.B. der Ort der Anschlusskontakte, der Batteriewanne einzeln anpassen lassen.

Außerdem ist sogar ein Wechsel der Leitungsanordnung einer bestehenden Batteriewanne leicht möglich, indem einfach der metallische zweite Bestandteil, also die metallische Platte, ausgewechselt wird. Ein Upgrade oder Recycling ist somit ohne Probleme möglich.

Gemäß einigen bevorzugten Ausführungsformen, Varianten oder Verfeinerungen von Ausführungsformen sind die Deformations-Messstrukturen zumindest teilweise (oder alle) als kapazitive Sensorstrukturen ausgebildet, beispielsweise zumindest teilweise (oder alle) als Interdigitalelektroden. Durch eine Verformung des Wannengehäuses verändern sich die kapazitiven Kopplungen zwischen den Einzelelektroden der Interdigitalelektroden betroffener Sensorstrukturen, was durch eine entsprechende Auswertevorrichtung erfassbar ist.

Gemäß einigen bevorzugten Ausführungsformen, Varianten oder Verfeinerungen von Ausführungsformen sind die Deformations-Messstrukturen zumindest teilweise als resistive Sensorstrukturen ausgebildet. Durch eine Verformung des Wannengehäuses werden betroffene Deformations-Messstrukturen gedehnt, gestaucht, oder unterbrochen, wodurch sich ihr elektrischer Widerstand (insbesondere Ohm'scher Widerstand) verändert, was durch eine entsprechende Auswertevorrichtung erfassbar ist.

Es kann eine Temperaturkompensation vorgesehen sein, wonach eine Temperatur der Batteriewanne, des Wannengehäuses, oder sogar individuelle Deformations-Messstrukturen, erfasst wird, und thermisch bedingte Veränderungen des elektrischen Widerstands der Deformations-Messstrukturen bei der Auswertung durch die Auswertevorrichtung außer Acht gelassen werden. Hierfür können in oder an dem Wannengehäuse ein oder mehrere Temperatursensoren angeordnet sein, welche durch die Auswertevorrichtung ebenfalls auswertbar sind.

Gemäß einigen bevorzugten Ausführungsformen, Varianten oder Verfeinerungen von Ausführungsformen sind die (insbesondere kapazitiven oder resistiven) Sensorstrukturen an einer von dem Wannengehäuse abgewandten Seite mit einem Kunststoffschaum, insbesondere Polyurethanschaum oder Polystyrol, bedeckt. Dabei kann der Kunststoffschaum direkt auf den Sensorstrukturen und/der der zweiten Schicht des Wannengehäuses angeordnet sein, oder mit einem Zwischenraum.

Gemäß einigen bevorzugten Ausführungsformen, Varianten oder Verfeinerungen von Ausführungsformen umfasst die Batteriewanne ferner eine Auswertevorrichtung, welche dazu eingerichtet ist:
ein elektrisches Anregungssignal an zumindest einen Teil (und bevorzugt alle) der Deformations-Messstrukturen anzulegen,
sowie eine jeweilige Signalantwort der Deformations-Messstrukturen auf das jeweilige Anregungssignal auszulesen, um darauf basierend einen Normalzustand oder einen Deformationszustand der jeweiligen Deformations-Messstruktur zu bestimmen.

Die Natur von Anregungssignal und Signalantwort hängen insbesondere von der gewählten Ausgestaltung der Deformations-Messstrukturen ab: bei resistiven Sensorstrukturen als Deformations-Messstrukturen kann das Anregungssignal beispielsweise eine angelegte Spannung mit einem vorbestimmten Spannungswert sein, und die Signalantwort entsprechend ein gemessener elektrischer Strom, der somit den jeweils aktuellen elektrischen Widerstand anzeigt. Bei kapazitiven Sensorstrukturen kann das Anregungssignal beispielsweise ein Wechselstromsignal sein, und die Signalantwort ein von der jeweils aktuellen Kapazität abhängiger Blindstrom.

Die Auswertevorrichtung kann eine digitale Recheneinrichtung aufweisen. Eine solche digitale Recheneinrichtung kann als eine beliebige Vorrichtung realisiert sein oder werden, welche zum Rechnen, und insbesondere zum Ausführen einer Software, einer App, oder eines Algorithmus in der Lage ist. Die Recheneinrichtung kann beispielsweise mindestens eine Prozessoreinheit aufweisen, z. B. eine Zentralprozessoreinheit (CPU) und/oder eine Graphikprozessoreinheit (GPU) und/oder eine Feld-programmierbare Logikschaltung (FPGA) und/oder eine anwendungsspezifische integrierte Schaltung (ASIC) und/oder eine Kombination davon. Die Recheneinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Recheneinrichtung kann ganz oder vollständig in einem lokalen Gerät und/oder ganz oder vollständig in einem entfernten System implementiert sein wie etwa in einem entfernt angeordneten Server und/oder einer Cloud-Computing-Plattform.

Die Auswertevorrichtung kann ebenfalls in dem konkaven Hohlraum der Batteriewanne angeordnet sein, beispielsweise unmittelbar oder mittelbar an dem Wannenboden der Batteriewanne angebracht, insbesondere mit Leiterbahnen der Schicht elektrischer Leiterbahnen verschaltet. Somit können Signalleitungen für die Anregungssignale und die Signalantworten vorteilhaft innerhalb der Schicht elektrischer Leiterbahnen angeordnet sein.

Die Auswertevorrichtung kann auch außerhalb der Batteriewanne angeordnet sein. Elektrische Zu- und Ableitungen zwischen den Deformations-Messstrukturen und der Auswertevorrichtung können entlang der Innenwände des Wannengehäuses der Batteriewanne verlaufen.

Gemäß einigen bevorzugten Ausführungsformen, Varianten oder Verfeinerungen von Ausführungsformen ist die Auswertevorrichtung in einem Kalibriervorgang derart kalibrierbar, dass eine jeweilige aktuelle Signalantwort während des Kalibriervorgangs den Normalzustand anzeigt und Abweichungen davon den Verformungszustand der jeweiligen Deformations-Messstruktur anzeigen. Hierdurch kann nicht nur unmittelbar nach der Fertigstellung der Batteriewanne oder nach deren Einbau (z.B. in ein Fahrzeug) der Kalibriervorgang als eine Anfangs-Kalibrierung vorgenommen werden, sondern es sind auch regelmäßige, oder ereignisbasierte, Kalibriervorgänge als Nachkalibrierungen möglich. Eine mögliche Nachkalibrierung betrifft beispielsweise eine aktuelle Temperatur in der Batteriewanne, und kann beispielsweise regelmäßig oder ereignisbasiert (etwa beim Über- und/oder Unterschreiten von Temperaturschwellen) erfolgen.

Eine Nachkalibrierung kann beispielsweise auch nach dem Feststellen eines Deformationszustands erfolgen, etwa wenn eine Deformation der Batteriewanne festgestellt wurde, welche die Funktion der Batteriewanne nicht (oder nur innerhalb eines vorbestimmten Toleranzbereichs) beeinträchtigt. Daraufhin kann in dem Kalibriervorgang der aktuelle Zustand wieder als Normalzustand definiert werden, sodass nur noch darüber hinaus gehende, zusätzliche Verformungen erfasst werden.

Gemäß einem weiteren Aspekt stellt die Erfindung auch ein Verfahren zum Herstellen einer Batteriewanne bereit, umfassend zumindest die Schritte:
Herstellen einer Wannenform aus einem Verbundwerkstoff; und
Aufbringen einer Vielzahl von elektrisch auslesbaren Deformations-Messstrukturen an oder über der Wannenform, insbesondere mittels eines Sprühdruckverfahrens.

Gemäß einem weiteren Aspekt stellt die Erfindung außerdem ein weiteres Verfahren zum Herstellen einer Batteriewanne bereit, umfassend zumindest die Schritte:
Aufbringen einer Vielzahl von elektrisch auslesbaren Deformations-Messstrukturen an (d.h. unmittelbar auf) oder über (d.h. beispielsweise auch mittelbar auf) einer metallischen Platte; und
Befestigen der metallischen Platte innen an einem Wannenboden eines in Wannenform ausgebildeten Verbundwerkstoffs.

Optional umfasst das Verfahren auch das Herstellen des in Wannenform ausgebildeten Verbundwerkstoffs.

Das Formen der Wannenstruktur wird somit von dem Aufbringen der Deformations-Messstrukturen an deren Träger vollständig entkoppelt. Somit können sowohl für das Aufbringen der Deformations-Messstrukturen als auch für das Herstellen der Wannenform jeweils die am besten geeigneten Verfahren verwendet werden, ohne Rücksicht auf den jeweils anderen Bestandteil.

Die getrennte Fertigung der Bestandteile ermöglicht es außerdem, ein und dieselbe Wannenform jeweils mit unterschiedlich ausgestalteten metallischen Platten (insbesondere was die Deformations-Messstrukturen und/oder deren Verschaltung angeht) zu kombinieren. Für Batteriewannen mit unterschiedlichen elektrischen Varianten braucht somit nur die Herstellung des Bestandteils mit der metallischen Platte verändert zu werden, was positive Skaleneffekte mit sich bringt. Zudem können die metallischen Platten, selbst mit daran angebrachten Deformations-Messstrukturen, einfacher gelagert werden als die fertigen Batteriewannen, was die Logistik der Herstellung ebenfalls vereinfacht.

Bei allen Varianten und Aspekten kann die Wannenform aus dem Verbundwerkstoff jeweils durch Aushärten (in Wannenform) eines Faserverbundwerkstoffs, insbesondere umfassend Glasfaser- und/oder Kohlefasereinlagen, hergestellt werden. Das Wannengehäuse kann somit beispielsweise aus carbonfaserverstärktem Kunststoff, CFK, hergestellt werden.

Gemäß einigen bevorzugten Ausführungsformen, Varianten oder Verfeinerungen von Ausführungsformen umfasst das Verfahren außerdem die folgenden Schritte:
Anlegen eines elektrischen Anregungssignals an zumindest einen Teil der Deformations-Messstrukturen;
Elektrisches Auslesen einer jeweiligen Signalantwort der Deformations-Messstrukturen auf das jeweils angelegte Anregungssignal; und
Kalibrieren einer Auswertevorrichtung derart, dass die jeweils ausgelesene Signalantwort einen unverformten Normalzustand der jeweiligen Deformations-Messstruktur anzeigt und Abweichungen in der Signalantwort einen Verformungszustand der jeweiligen Deformations-Messstruktur anzeigen.

Wie im Vorangehenden bereits mit Bezug auf die Auswertevorrichtung beschrieben wurde, kann auf diese Weise eine optimale Einstellung der Batteriewanne erfolgen, insbesondere unmittelbar nach der Herstellung der Batteriewanne und/oder nach einem Einbau der Batteriewanne in den Bestimmungsort, etwa ein Fahrzeug.

Das Anlegen des Anregungssignals, das Auslesen der Signalantwort und/oder das Kalibrieren der Auswertevorrichtung (insbesondere alle drei dieser Schritte) können vorteilhaft auf ein- oder mehrmals, regelmäßig oder ereignisbasiert, während des Betriebs der Batterie in der Batteriewanne erfolgen, insbesondere zur Nachkalibrierung.

Weitere vorteilhafte Ausführungsformen, Varianten, und Verfeinerungen von Ausführungsformen ergeben sich aus der nachfolgenden detaillierten Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen hierbei:
- Fig. 1: eine schematische Querschnittsdarstellung zur Erläuterung einer Batteriewanne gemäß einer Ausführungsform der vorliegenden Erfindung;
- Fig. 2A: eine schematische isometrische Darstellung der Batteriewanne aus Fig. 1;
- Fig. 2B: eine schematische Draufsicht auf eine Batteriewanne nach einer Variante;
- Fig. 3: einen beispielhaften Ausschnitt aus einer erfindungsgemäßen Batteriewanne gemäß einer Variante;
- Fig. 4: einen beispielhaften Ausschnitt aus einer erfindungsgemäßen Batteriewanne gemäß einer weiteren Variante;
- Fig. 5: eine schematische Querschnittsdarstellung zur Erläuterung einer Batteriewanne gemäß einer weiteren Ausführungsform der vorliegenden Erfindung;
- Fig. 6: ein schematisches Flussdiagramm zum Erläutern eines Verfahrens zum Herstellen einer Batteriewanne gemäß einer Ausführungsform der vorliegenden Erfindung; und
- Fig. 7: ein schematisches Flussdiagramm zum Erläutern eines Verfahrens zum Herstellen einer Batteriewanne gemäß einer weiteren Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

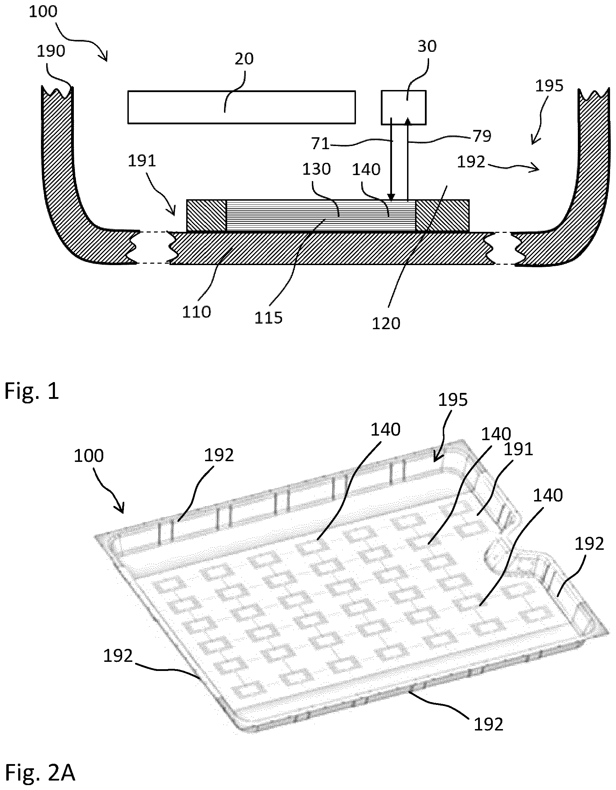

Fig. 1 zeigt eine schematische Querschnittsdarstellung zur Erläuterung einer Batteriewanne 100 gemäß einer Ausführungsform der vorliegenden Erfindung.

Die Batteriewanne 100 aus Fig. 1 umfasst ein Wannengehäuse 190, welches in Wannenform (mit einem Wannenboden 191 und Wannenwänden 192) aus einem Verbundwerkstoff ausgebildet ist. Der Verbundwerkstoff kann durch einen in einer entsprechenden Form ausgehärteten Faserverbundwerkstoff, insbesondere umfassend Glasfaser- und/oder Kohlefasereinlagen, ausgebildet sein. Das Wannengehäuse 190 kann somit beispielsweise aus carbonfaserverstärktem Kunststoff, CFK, ausgebildet sein. Der Verbundwerkstoff bildet eine erste durchgehende Schicht 110 des Wannengehäuses 190.

Hier und im Folgenden beziehen sich Bezeichnungen wie "innen" oder "Innenseite" stets auf den von der Wannenform gebildeten konkaven Hohlraum 195, während sich "außen" oder "Außenseite" stets auf den Raum außerhalb der Wannenform, insbesondere an dessen konvexer Seite, beziehen.

Die Batteriewanne 100 ist zur Aufnahme einer Batterie 20 in dem konkaven Hohlraum 195 vorgesehen. In einigen Varianten umfasst die Batteriewanne 100 eine in dem konkaven Hohlraum 195 angeordnete Batterie 20, insbesondere eine Fahrzeugbatterie.

Über der Innenseite der ersten Schicht 110, hier beispielsweise unmittelbar an dieser, ist eine Schicht elektrischer Leiterbahnen 130 angeordnet. In der Schicht elektrischer Leiterbahnen 130 ist an einem ebenen Abschnitt des Wannengehäuses 190 am Wannenboden 191 eine Vielzahl von elektrisch auslesbaren Deformations-Messstrukturen 140 ausgebildet, welche im Folgenden anhand der Fig. 2A bis 4 noch näher erläutert werden.

Die Schicht elektrischer Leiterbahnen 130 ist optional in eine durchgehende zweite Schicht 120 eingebettet, welche beispielsweise als eine elektrisch isolierende Lackbeschichtung ausgebildet sein kann. Die zweite Schicht 120 kann sowohl neben der Schicht elektrischer Leiterbahnen 130 als auch oberhalb dieser verlaufen, um diese nach innen gegen Beschädigungen zu schützen. Hierzu kann die zweite Schicht 120 beispielsweise aufgetragen werden, nachdem die Deformations-Messstrukturen 140 über der ersten Schicht 110 aufgetragen wurden.

Die Batteriewanne 100 umfasst optional auch eine Auswertevorrichtung 30, welche dazu eingerichtet ist, ein elektrisches Anregungssignal 71 an zumindest einen Teil (bevorzugt an alle) der Deformations-Messstrukturen 140 anzulegen, sowie eine jeweilige (insbesondere elektrische) Signalantwort 79 der Deformations-Messstrukturen 140 auf das jeweilige Anregungssignal 71 auszulesen, um darauf basierend einen Normalzustand oder einen Deformationszustand der jeweiligen Deformations-Messstruktur 140 zu bestimmen.

Das Bestimmen eines Deformationszustands kann entweder lediglich die Information umfassen, dass eine Deformation der entsprechenden Deformations-Messstruktur 140 stattgefunden hat, oder kann zusätzlich weitere Informationen umfassen, beispielsweise einen Grad der Verformung, einen Zeitpunkt der Verformung und/oder dergleichen mehr. Die jeweiligen Informationen können durch ein Ausgabesignal der Auswertevorrichtung 30 angezeigt werden.

Die Auswertevorrichtung 30 kann, wie in Fig. 1 schematisch dargestellt ist, zusammen mit der Batterie 20 in den konkaven Hohlraum 195 in dem Wannengehäuse 190 eingesetzt werden. Die Batterie 20, die Auswertevorrichtung 30 und das Wannengehäuse 190 können dazu derart dimensioniert werden, dass die Auswertevorrichtung 30 und die Batterie 20 nebeneinander über oder an der obersten Schicht des Wannenbodens 191 (hier: auf der Schicht elektrischer Leiterbahnen 130 und der zweiten Schicht 120) angebracht werden. Die Auswertevorrichtung 30 kann direkt oder mittelbar mit den Leiterbahnen der Schicht elektrischer Leiterbahnen 130 verbunden werden, um die Anregungssignale 71 an die Deformations-Messstrukturen 140 anlegen zu können und um die Signalantworten 79 von den Deformations-Messstrukturen 140 empfangen zu können. Hierfür können Drähte, Kabel, flexible Leiterbahnen oder Ähnliches verwendet werden.

Alternativ kann die Auswertevorrichtung 30 auch außerhalb des Wannengehäuses 190 angeordnet werden. In diesem Fall können Zu- und Ableitungen oder Signalleitungen zwischen den Deformations-Messstrukturen 140 und der Auswertevorrichtung 30 an den Wannenwänden 191 angeordnet sein. Hierzu kann sich die Schicht elektrischer Leiterbahnen 130 ganz oder teilweise auch über die Wannenwände 191 erstrecken und die Zu- und Ableitungen umfassen.

Zur Herstellung kann die Schicht elektrischer Leiterbahnen 130 beispielsweise mittels eines Sprühdruckverfahrens auf den Verbundwerkstoff der ersten Schicht 110 der Wannenform aufgetragen werden.

Ist die Auswertevorrichtung 30 innerhalb des Wannengehäuses 190 angeordnet, können Zu- und Ableitungen der Auswertevorrichtung 30 an ein externes Gerät vorgesehen sein, etwa einen Fahrzeugcomputer und/oder eine Batteriesteuerung. Über eine Ableitung können Signale, welche den durch die Auswertevorrichtung 30 bestimmten Zustand der Deformations-Messstrukturen 140 (jeweils Normalzustand oder Verformungszustand) anzeigen, von der Auswertevorrichtung 30 ausgegeben werden. Über eine Zuleitung kann beispielsweise ein Auslöser empfangen werden, als Reaktion auf welchen die Auswertevorrichtung 30 ein oder mehrere Anregungssignale 71 aussendet und/oder einen Kalibriervorgang durchführt.

Fig. 2A zeigt eine beispielhafte isometrische Darstellung einer erfindungsgemäßen Batteriewanne 100. Im Wesentlichen der gesamte flache Wannenboden 191 ist, vorzugsweise in einem regelmäßigen Raster, mit einzelnen Deformations-Messstrukturen 140 versehen. Die Deformations-Messstrukturen 140 können jeweils einzeln elektrisch auslesbar sein, oder vollständig oder teilweise reihen- oder parallelverschaltet sein, um durch die Auswertevorrichtung 30 zumindest teilweise als Gruppe ausgelesen zu werden.

Die einzelnen Deformations-Messstrukturen 140 können kapazitiv oder resistiv ausgebildet sein, wobei entweder alle Deformations-Messstrukturen 140 resistiv, oder alle Deformations-Messstrukturen 140 kapazitiv, oder manche Deformations-Messstrukturen 140 resistiv und andere Deformations-Messstrukturen 140 kapazitiv ausgebildet sein können.

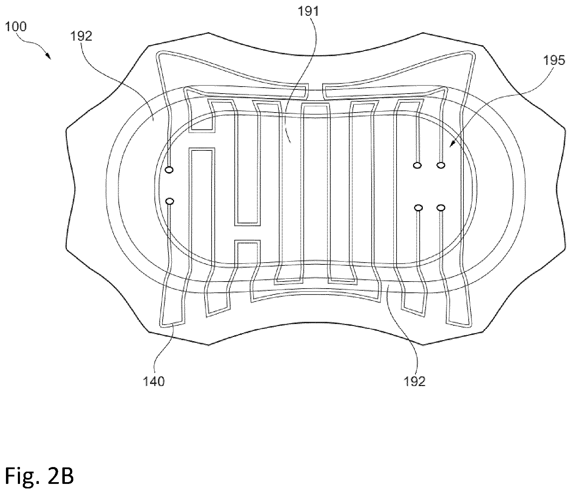

Fig. 2B zeigt eine schematische Draufsicht auf eine Batteriewanne 100 nach einer Variante. Bei der Batteriewanne aus Fig. 2B erstrecken sich einzelne Deformations-Messstrukturen 140 auch über die Wannenwände 192; somit kann auch eine Deformation der Wannenwände 192 erfasst werden. Beispielhaft sind in Fig. 2B drei einzelne resistiv ausgebildete Deformations-Messstrukturen 140 als separate Stromkreise dargestellt, mit denen jeweils ein entsprechender Bereich der Batteriewanne 100 auf Deformationen überwacht werden kann.

Diese einzelnen resistiven Deformations-Messstrukturen 140 können gleichartig oder verschiedenartig ausgestaltet und geformt sein, symmetrisch oder unsymmetrisch, und gleich oder verschieden groß. Auf diese Weise können beispielsweise einzelne Bereiche der Batteriewanne 100, in denen sich bestimmte Abschnitte der Batterie 20 oder andere in der Batteriewanne 100 angeordnete Elemente befinden, einzeln überwacht werden.

Über die in Fig. 2B jeweils offen gezeigten Anschlusskontakte der jeweiligen Deformations-Messstruktur 140 kann entweder eine jeweilige Auswertevorrichtung 130 oder eine gemeinsame Auswertevorrichtung 130 elektrisch angeschlossen werden, um das Anregungssignal 71 und die Signalantwort 79 auszutauschen.

Die Herstellung der Wannenform der Batteriewanne 100 aus Fig. 2B aus dem Verbundwerkstoff ermöglicht eine große Freiheit in deren geometrischer Gestaltung, während das Auftragen der Deformations-Messstrukturen 140 z.B. im Sprühdruckverfahren an deren geometrische Form angepasst werden kann, um ein optimales Ergebnis zu erzielen.

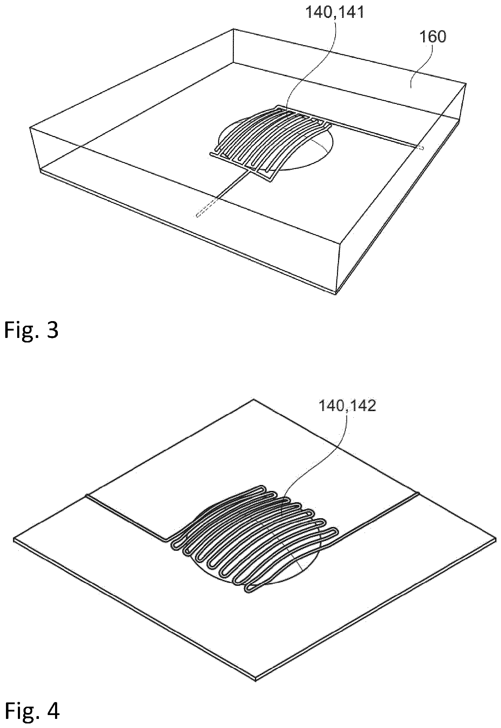

Fig. 3 zeigt eine beispielhafte isometrische Darstellung eines Ausschnitts aus der Batteriewanne 100, welcher eine einzelne, Deformations-Messstruktur 140 enthält, welche als kapazitive Sensorstruktur 141 realisiert ist. Die gezeigte Deformations-Messstruktur 140 umfasst eine Interdigitalelektrode, an welche als Anregungssignal 71 durch die Auswertevorrichtung beispielsweise ein Wechselstromsignal angelegt werden kann, um die jeweils aktuelle Kapazität zu bestimmen.

In Fig. 3 ist beispielhaft ein Fall gezeigt, in welchem der Untergrund, auf dem sich die Deformations-Messstruktur 140 befindet, von außen (unten in Fig. 3) bereits kugelschnittförmig verformt wurde. Damit unterscheidet sich die aktuelle Kapazität der Interdigitalelektrode von derjenigen Kapazität, welche bei einer Kalibrierung dieser Deformations-Messstruktur 140 (vorzugsweise im unverformten Zustand) festgestellt wurde, sodass die Auswertevorrichtung 30 auf dieser Basis einen Verformungszustand dieser Deformations-Messstruktur 140 feststellen kann.

Zur Verbesserung der Messung kann an oder über der Schicht elektrischer Leiterbahnen 130 ein Kunststoffschaum 160 angebracht werden, beispielsweise Polyurethanschaum, Polystyrol, oder dergleichen. Dieser agiert nicht nur als zusätzliche Schutzschicht (der in Fig. 3 oben angeordneten Batterie gegen Einflüsse von außen sowie der Schicht elektrischer Leiterbahnen 130 gegen Einflüsse von innen), sondern auch als zusätzliches Dielektrikum zwischen den Interdigitalelektroden. Bei einer Verformung des Wannengehäuses 190 von außen wird somit auch dieser Kunststoff 160 verformt (gestaucht oder gestreckt), wodurch sich die elektrische Kapazität der kapazitiven Sensorstruktur 141 zusätzlich messbar verändert.

Fig. 4 zeigt eine beispielhafte isometrische Darstellung eines Ausschnitts aus der Batteriewanne 100, welcher eine einzelne Deformations-Messstruktur 140 enthält, welche als resistive Sensorstruktur 142 realisiert ist.

Wie in Fig. 4 ersichtlich ist, kann dafür eine einzelne elektrische Leitung innerhalb der Schicht elektrischer Leiterbahnen 130 zur Ausbildung der resistiven Sensorstruktur 142 mehrfach an sich entlang vor und zurück gefaltet werden, jeweils mit einem isolierenden Abstand zwischen parallelen Liniensträngen, sodass eine flächiger, dicht von der elektrischen Leitung bedeckter Abschnitt entsteht, hier in Rechtsecks- insbesondere Quadratform.

Auch in Fig. 4 ist beispielhaft eine bestehende Deformierung des Untergrunds der Deformations-Messstruktur 140 gezeigt, aufgrund dessen einzelne Abschnitte der elektrischen Leitung der Deformations-Messstruktur 140 gestaucht oder (vor allem) gedehnt werden. Es kann auch zu Kurzschlüssen oder zur vollständigen Unterbrechung durch Durchtrennung kommen. In jedem dieser Fälle ändert sich der elektrische Widerstand der resistiven Sensorstruktur 142, was wiederum durch die Auswertevorrichtung 30 erfassbar ist.

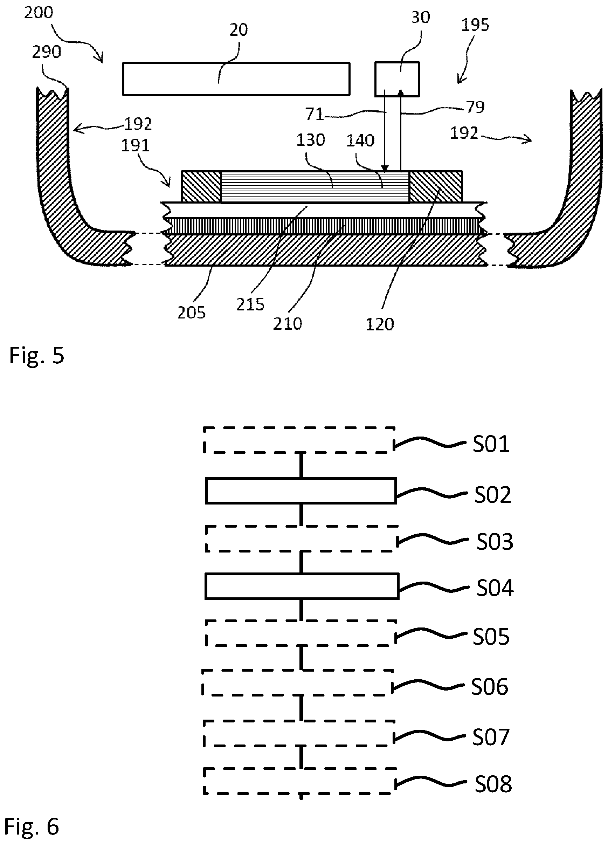

Fig. 5 zeigt eine schematische Querschnittsdarstellung zur Erläuterung einer Batteriewanne 200 gemäß einer weiteren Ausführungsform der vorliegenden Erfindung.

Die Batteriewanne 200 aus Fig. 5 ist eine Variante der Batteriewanne 100 aus Fig. 1 und unterscheidet sich von dieser darin, dass das Wannengehäuse 290 der Batteriewanne 200 zwei Bestandteile umfasst. Ein erster Bestandteil besteht aus einer, oder umfasst eine, Wannenform 205 aus einem Verbundwerkstoff, mit einem Wannenboden 191.

An oder über dem Wannenboden 191 ist, als ein zweiter Bestandteil des Wannengehäuses 290, eine Metallplatte 210 mit einer elektrisch isolierenden Beschichtung 215 angebracht, an oder über welcher wiederum die Schicht elektrischer Leiterbahnen 130 und die zweite Schicht 120 angeordnet sind. Bei der Ausführungsform gemäß Fig. 5 kann somit der Verbundwerkstoff 305 als eine erste Schicht realisierend angesehen werden.

Bei dieser Variante kann die flache Metallplatte 210 mit den daran angebrachten Deformations-Messstrukturen 140 vorteilhaft nach ihrer Herstellung in den flachen Wannenboden 191 an der Innenseite der Wannenform 205 aus dem Verbundwerkstoff eingelegt werden und dort befestigt werden, beispielsweise geklebt werden. Die metallische Platte 210 kann mit einer Dicke von 1 Millimeter oder weniger, insbesondere von 0,5 Millimeter oder weniger, ausgebildet sein, was sie besonders leicht macht.

Die strukturelle Stabilität des Wannengehäuses 290 wird somit im Wesentlichen durch den ersten Bestandteil, also die Wannenform 205 aus dem Verbundwerkstoff bereitgestellt, während die elektrische Funktionalität, vor allem die Deformationssensorik, durch die Metallplatte 210 mit den daran angeordneten Deformations-Messstrukturen 140 bereitgestellt wird.

Im Folgenden wird ein erfindungsgemäßes Verfahren zum Herstellen der erfindungsgemäßen Batteriewannen 100; 200 beschrieben werden. Zur Erläuterung der Verfahrensschritte werden teilweise Bezugszeichen der vorangehenden Fig. 1-5 verwendet werden, wobei es sich versteht, dass dies nicht einschränkend verstanden werden soll. Zur Vermeidung von Wiederholungen werden die Eigenschaften einzelner Elemente nicht immer im Detail ausgeführt; hierfür wird auf die vorangehende abstrakte Beschreibung der Erfindung sowie auf die detaillierte Beschreibung der Fig. 1-5 verwiesen.

Fig. 6 zeigt ein schematisches Flussdiagramm zur Erläuterung eines Verfahrens zum Herstellen einer Batteriewanne. Die hergestellte Batteriewanne kann die im Vorangehenden beschriebene Batteriewanne 200 sein, eine Variante oder Verfeinerung davon, oder eine davon verschiedene Batteriewanne. Dementsprechend ist das Verfahren gemäß allen in Bezug auf alle erfindungsgemäßen Batteriewannen und insbesondere die erfindungsgemäße Batteriewanne 200 beschriebenen Optionen, Varianten, Ausführungsformen und Verfeinerungen anpassbar und umgekehrt.

In einem Schritt S02 wird eine Vielzahl von elektrisch auslesbaren Deformations-Messstrukturen 140 an oder über einer metallischen Platte 210 aufgebracht, beispielsweise wie im Vorangehenden mit Bezug auf Fig. 5 erläutert wurde. Da die metallische Platte 210 flach ist, können die Leiterbahnen der Schicht elektrischer Leiterbahnen 130 beispielsweise mittels Druckverfahren aufgebracht werden. Denkbar sind jedoch auch andere Verfahren, etwa Robotersprühverfahren (oder: Roboter-Sprühdruckverfahren) mit Masken.

Die metallische Platte 210 kann eine Metallschicht mit einer unmittelbar daran angebrachten elektrisch isolierenden Beschichtung 215 sein.

In einem optionalen Schritt S03 wird auf der metallischen Platte 210 (insbesondere unmittelbar an der isolierenden Beschichtung 215) eine Isolierschicht 120 angebracht, wobei die Deformations-Messstrukturen 140 in die Isolierschicht 120 eingebettet werden. Dabei umschließt die Isolierschicht die Deformations-Messstrukturen 140 zumindest seitlich (also innerhalb einer Schicht elektrischer Leiterbahnen 130, in welcher die Deformations-Messstrukturen ausgebildet sind), und bevorzugt zusätzlich an allen Seiten. Alternativ oder zusätzlich kann in diesem Schritt auch ein elektrisch isolierender Kunststoffschaum 160 aufgebracht werden.

In einem Schritt S04 wird die metallische Platte 210, 215 (optional mit der daran angebrachten Isolierschicht 120) innen an einem Wannenboden 191 eines in Wannenform 205 ausgebildeten Verbundwerkstoffs befestigt, beispielsweise angeklebt.

In einem optionalen Schritt S01 kann zuvor der Verbundwerkstoff in der Wannenform 205 ausgebildet werden, beispielsweise durch Spritzgießen oder Formpressen. Der Verbundwerkstoff kann beispielsweise ein Faserverbundwerkstoff sein, insbesondere umfassend Glasfaser- und/oder Kohlefasereinlagen, welcher in Gestalt der Wannenform 205 ausgehärtet wird.

In einem Schritt S05 können weitere Teilschritte zum Herstellen der Batteriewanne 200 durchgeführt werden, beispielsweise (in der vorliegenden Reihenfolge oder in einer anderen):
- ein elektrisches Verbinden/Kontaktieren der Auswertevorrichtung 30 mit den Leiterbahnen der Schicht elektrischer Leiterbahnen 130,
- ein Aufbringen des Kunststoffschaums 160 auf die Schicht elektrischer Leiterbahnen 130,
- ein Anschließen der Auswertevorrichtung 30 an eine Fahrzeugelektronik eines Fahrzeugs,
- ein Einbau der Batterie 20 in die Batteriewanne 200 und/oder
- ein Einbau der Batteriewanne 200 in das Fahrzeug.

In weiteren optionalen Schritten S06-S08 kann zudem ein Kalibriervorgang einer Auswertevorrichtung 30 der Batteriewanne 100 vorgenommen werden. Dieser Kalibriervorgang S06-S08 kann unmittelbar nach Schritt S04 oder Schritt S05 (inklusive eines, mehrerer oder aller Teilschritte), insbesondere nach dem Einbau der Batteriewanne 200 in ihren zukünftigen Bestimmungsort, etwa ein Fahrzeug, durchgeführt werden. Der Kalibriervorgang S06-S08 kann auch mehrfach durchgeführt werden, insbesondere regelmäßig oder ereignisbasiert (immer wenn ein Service durchgeführt wird, immer wenn ein Stoß festgestellt wurde, etc.).

In einem Schritt S06 wird jeweils ein elektrisches Anregungssignal 71 an zumindest einen Teil (bevorzugt alle) der Deformations-Messstrukturen 140 angelegt.

In einem Schritt S07 wird eine jeweilige Signalantwort 79 der Deformations-Messstrukturen 140 auf das jeweils angelegte Anregungssignal 71 elektrisch ausgelesen, beispielsweise durch die Auswertevorrichtung 30, wie dies im Vorangehenden bereits erläutert wurde.

In einem Schritt S08 wird die Auswertevorrichtung 30 derart kalibriert (d.h. insbesondere, deren Entscheidungsalgorithmus derart angepasst), dass die jeweils ausgelesene Signalantwort 79 einen unverformten Normalzustand der jeweiligen Deformations-Messstruktur 140 anzeigt, und Abweichungen in der Signalantwort 79 einen Verformungszustand der jeweiligen Deformations-Messstruktur 140 anzeigen.

In weiteren optionalen Schritten kann beispielsweise ein Ausgabesignal ausgegeben werden, welches den Normalzustand und/oder Deformationszustand einer oder mehrerer Deformations-Messstrukturen 140 anzeigt, optional mit zusätzlichen Informationen wie etwa den Grad der Verformung.

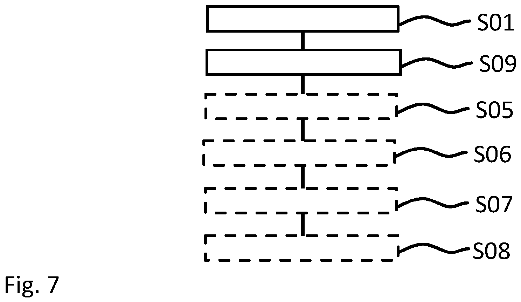

Fig. 7 zeigt ein schematisches Flussdiagramm zur Erläuterung eines weiteren Verfahrens zum Herstellen einer Batteriewanne. Die hergestellte Batteriewanne kann die im Vorangehenden beschriebene Batteriewanne 100 sein, eine Variante oder Verfeinerung davon (etwa wie in Fig. 2A oder Fig. 2B), oder eine davon verschiedene Batteriewanne. Dementsprechend ist das Verfahren gemäß allen in Bezug auf alle erfindungsgemäßen Batteriewannen und insbesondere die erfindungsgemäße Batteriewanne 100 beschriebenen Optionen, Varianten, Ausführungsformen und Verfeinerungen anpassbar und umgekehrt.

In dem Schritt S01 wird ein Verbundwerkstoff in einer Wannenform 205 ausgebildet, beispielsweise durch Spritzgießen oder Formpressen. Der Verbundwerkstoff kann beispielsweise ein Faserverbundwerkstoff sein, insbesondere umfassend Glasfaser- und/oder Kohlefasereinlagen, welcher in Gestalt der Wannenform 205 ausgehärtet wird.

In einem Schritt S09 wird eine Vielzahl von elektrisch auslesbaren Deformations-Messstrukturen 140 an oder über der in Schritt S01 hergestellten Wannenform 205 mittels eines Sprühdruckverfahrens aufgebracht. Insbesondere erfolgt das Aufbringen der Deformations-Messstrukturen 140 unmittelbar an der Wannenform 205. Bei dem Sprühdruckverfahren kann es sich beispielsweise um ein Roboter-Sprühdruckverfahren handeln.

Die bereits im Vorangehenden beschriebenen Schritte S05-S08 können anschließend jeweils optional durchgeführt werden.

### Bezugszeichenliste

- 20: Batterie
- 30: Auswertevorrichtung
- 71: Anregungssignal
- 79: Signalantwort
- 100: Batteriewanne
- 110: erste durchgehende Schicht
- 115: Beschichtung
- 120: zweite durchgehende Schicht
- 130: Schicht elektrischer Leiterbahnen
- 140: Deformations-Messstrukturen
- 141: kapazitive Sensorstruktur
- 142: resistive Sensorstruktur
- 160: Kunststoffschaum
- 190: Wannengehäuse
- 191: Wannenboden
- 192: Wannenwand
- 195: konkaver Hohlraum der Wannenform des Wannengehäuses
- 200: Batteriewanne
- 205: Wannenform
- 210: Metallplatte
- 215: Beschichtung
- 290: Wannengehäuse
- S01..S08: Verfahrensschritte

## Patentansprüche

1. Batteriewanne (100; 200) zum Aufnehmen einer Batterie (20), umfassend:
ein Wannengehäuse (190; 290);
wobei eine Schicht elektrischer Leiterbahnen (130) an oder über einer durchgehenden ersten Schicht (110; 205) des Wannengehäuses (190; 290) aus einem Verbundwerkstoff an dessen konkaver Seite angeordnet ist, und
wobei in der Schicht elektrischer Leiterbahnen (130) zumindest an einem ebenen Abschnitt des Wannengehäuses (190; 290) eine Vielzahl von elektrisch auslesbaren Deformations-Messstrukturen (140) ausgebildet ist.

2. Batteriewanne (100; 200) nach Anspruch 1,
wobei die Schicht elektrischer Leiterbahnen (130) in eine zweite Schicht (120) des Wannengehäuses (190; 290) eingebettet ist, und
wobei die zweite Schicht (120) insbesondere eine Lackbeschichtung ist.

3. Batteriewanne (100; 200) nach Anspruch 1 oder 2,
wobei die erste Schicht (110; 205) des Wannengehäuses (290) aus einem in einer entsprechenden Form ausgehärteten Faserverbundwerkstoff, insbesondere umfassend Glasfaser- und/oder Kohlefasereinlagen, ausgebildet ist.

4. Batteriewanne (200) nach einem der Ansprüche 1 bis 3, wobei das Wannengehäuse (290) einen in Wannenform ausgebildeten ersten Bestandteil aus einem Verbundwerkstoff (205) sowie einen flachen metallischen zweiten Bestandteil (210) aufweist, welcher, insbesondere direkt, an einem Wannenboden (191) der Wannenform des ersten Bestandteils (205) an dessen konkaver Seite angebracht ist.

5. Batteriewanne (200) nach Anspruch 4,
wobei der zweite Bestandteil als eine metallische Platte (210) mit einer Dicke von 1 Millimeter oder weniger, insbesondere von 0,5 Millimeter oder weniger, ausgebildet ist.

6. Batteriewanne (100; 200) nach einem der Ansprüche 1 bis 5,
wobei die Deformations-Messstrukturen (140) zumindest teilweise als kapazitive Sensorstrukturen (141) ausgebildet sind.

7. Batteriewanne (100; 200) nach Anspruch 6,
wobei die kapazitiven Sensorstrukturen (141) zumindest teilweise als Interdigitalelektroden ausgeführt sind.

8. Batteriewanne (100; 200) nach einem der Ansprüche 1 bis 7,
wobei die Deformations-Messstrukturen (140) zumindest teilweise als resistive Sensorstrukturen (142) ausgebildet sind.

9. Batteriewanne (100; 200) nach einem der Ansprüche 6 bis 8, wobei die Sensorstrukturen (141, 142) an einer von dem Wannengehäuse (190; 290) abgewandten Seite mit einem Kunststoffschaum (160), insbesondere Polyurethanschaum oder Polystyrol, bedeckt sind.

10. Batteriewanne (100; 200) nach einem der Ansprüche 1 bis 9,
ferner umfassend eine Auswertevorrichtung (30), welche dazu eingerichtet ist:
ein elektrisches Anregungssignal (71) an zumindest einen Teil der Deformations-Messstrukturen (140) anzulegen,
sowie eine jeweilige Signalantwort (79) der Deformations-Messstrukturen (140) auf das jeweilige Anregungssignal (71) auszulesen, um darauf basierend einen Normalzustand oder einen Deformationszustand der jeweiligen Deformations-Messstruktur (140) zu bestimmen.

11. Batteriewanne (100; 200) nach Anspruch 10,
wobei die Auswertevorrichtung (30) in einem
Kalibriervorgang (S06-S08) derart kalibrierbar ist, dass eine jeweilige aktuelle Signalantwort (79) während des Kalibriervorgangs (S06-S08) den Normalzustand anzeigt und Abweichungen davon den Verformungszustand der jeweiligen Deformations-Messstruktur (140) anzeigen.

12. Verfahren zum Herstellen einer Batteriewanne (100), umfassend zumindest die Schritte:
Herstellen (S01) einer Wannenform (205) aus einem Verbundwerkstoff; und
Aufbringen (S09) einer Vielzahl von elektrisch auslesbaren Deformations-Messstrukturen (140) an oder über der Wannenform (205) mittels eines Sprühdruckverfahrens.

13. Verfahren zum Herstellen einer Batteriewanne (200), umfassend zumindest die Schritte:
Aufbringen (S02) einer Vielzahl von elektrisch auslesbaren Deformations-Messstrukturen an oder über einer metallischen Platte (210); und
Befestigen (S04) der metallischen Platte (210) innen an einem Wannenboden (191) eines in Wannenform (205) ausgebildeten Verbundwerkstoffs.

14. Verfahren nach Anspruch 12 oder 13, ferner umfassend:
Anlegen (S06) eines elektrischen Anregungssignals (71) an zumindest einen Teil der Deformations-Messstrukturen (140);
Elektrisches Auslesen (S07) einer jeweiligen Signalantwort (79) der Deformations-Messstrukturen (140) auf das jeweils angelegte Anregungssignal (71); und
Kalibrieren (S08) einer Auswertevorrichtung (30) derart, dass die jeweils ausgelesene Signalantwort (79) einen unverformten Normalzustand der jeweiligen Deformations-Messstruktur (140) anzeigt und Abweichungen in der Signalantwort (79) einen Verformungszustand der jeweiligen Deformations-Messstruktur (140) anzeigen.
